(19) Europäisches Patentamt / European Patent Office / Office européen des brevets

(11) **EP 3 115 887 B1**

(12) # EUROPEAN PATENT SPECIFICATION

(45) Date of publication and mention
of the grant of the patent:
**04.07.2018 Bulletin 2018/27**

(51) Int Cl.:
***G06F 7/72*** (2006.01)

(21) Application number: **16162209.7**

(22) Date of filing: **24.03.2016**

(54) **METHOD, DEVICE AND NON-TRANSITORY COMPUTER-READABLE MEDIUM FOR CRYPTOGRAPHIC COMPUTATION**

VERFAHREN, VORRICHTUNG UND NICHTTRANSITORISCHES COMPUTERLESBARES MEDIUM ZUR KRYPTOGRAFISCHEN BERECHNUNG

PROCÉDÉ, DISPOSITIF ET SUPPORT LISIBLE PAR ORDINATEUR NON TRANSITOIRE DE CALCUL CRYPTOGRAPHIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2015 IL 23988015**

(43) Date of publication of application:
**11.01.2017 Bulletin 2017/02**

(73) Proprietor: **Winbond Electronics Corp.
Taichung City, Taiwan. (TW)**

(72) Inventor: **KALUZHNY, Uri
Taichung City (TW)**

(74) Representative: **Chamberlain, Alan James
Haseltine Lake LLP
Redcliff Quay
120 Redcliff Street
Bristol BS1 6HU (GB)**

(56) References cited:
• **DAVID TINOCO VARELA: "How to Avoid the N-1 Attack Without Costly Implementations", INTERNATIONAL JOURNAL OF NETWORK SECURITY & ITS APPLICATIONS, vol. 4, no. 4, 31 July 2012 (2012-07-31), pages 109-122, XP055318568, ISSN: 0975-2307, DOI: 10.5121/ijnsa.2012.4407**

• **GIRAUD C: "An RSA Implementation Resistant to Fault Attacks and to Simple Power Analysis", IEEE TRANSACTIONS ON COMPUTERS, IEEE SERVICE CENTER, LOS ALAMITOS, CA, US, vol. 55, no. 9, 1 September 2006 (2006-09-01), pages 1116-1120, XP002460785, ISSN: 0018-9340, DOI: 10.1109/TC.2006.135**

• **RALF ZIMMERMANN ET AL: "High-Performance Integer Factoring with Reconfigurable Devices", FIELD PROGRAMMABLE LOGIC AND APPLICATIONS (FPL), 2010 INTERNATIONAL CONFERENCE ON, IEEE, PISCATAWAY, NJ, USA, 31 August 2010 (2010-08-31), pages 83-88, XP031854481, ISBN: 978-1-4244-7842-2**

• **ORUP H ED - KNOWLES S ET AL: "Simplifying quotient determination in high-radix modular multiplication", COMPUTER ARITHMETIC, 1995., PROCEEDINGS OF THE 12TH SYMPOSIUM ON BATH, UK 19-21 JULY 1995, LOS ALAMITOS, CA, USA,IEEE COMPUT. SOC, US, 19 July 1995 (1995-07-19), pages 193-199, XP010146635, DOI: 10.1109/ARITH.1995.465359 ISBN: 978-0-8186-7089-3**

• **Fabrice Ben Hamouda ET AL: "Exploration of efficiency and side-channel security of different implementations of RSA", , 1 September 2011 (2011-09-01), XP055317706, Retrieved from the Internet: URL:http://www.normalesup.org/~fbenhamo/files/stage2011/report.pdf [retrieved on 2016-11-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE DISCLOSURE

Field of the Disclosure

The disclosure generally relates to a computation circuit and method thereof, and more particularly, to a computation circuit involving efficient modular multiplication.

Description of Related Art

There are many important cryptosystems, such as RSA and DSA, using modular arithmetic which includes exponentiation and multiplication with large modulus values. A classic method of computing a modular product involves first multiplying operand as non-modular integer and then obtaining a modulus of the result, which is referred to as modular reduction. However, the modular reduction is an expensive computation, which is equivalent to long division.
For such reason, it is a common practice in cryptographic computations to use a more efficient method known as Montgomery modular multiplication (or simply Montgomery multiplication.) In order to perform the Montgomery modular multiplication, the operands are converted to a special Montgomery form using an algorithm known as Montgomery reduction. The multiplication of the operands in Montgomery form avoids the need for modular reduction as required in conventional arithmetic (although a simpler conditional reduction is still required if the resulting product is greater than the modulus.) The Montgomery reduction and multiplication algorithms are described, for example, by Menezes et al., in the Handbook of Applied Cryptography (1996), section 14.3.2, pages 600-603, which is incorporated herein by reference.
Blinding techniques are commonly applied in cryptographic operations in order to reduce vulnerability to attacks that attempt to extract secret values used in the computations. Various blinding techniques have been applied in modular computations, including Montgomery multiplications. For example, U.S. Patent 8,422,671 describes a method in which a plurality of Montgomery multiplications are used in a modular exponentiation for decrypting a ciphertext using a secret key. The ciphertext is blinded by multiplying it with a random number, and the final value is multiplied by an inverse element to remove the blinding. U.S. Patent 8,738,927 similarly describes a technique in which blinding is combined with Montgomery reduction.
Nothing herein should be construed as an admission of knowledge in the prior art of any portion of the present disclosure. Furthermore, citation or identification of any document in this application is not an admission that such document is available as prior art to the present disclosure, or that any reference forms a part of the common general knowledge in the art.

SUMMARY OF THE DISCLOSURE

Embodiments of the present disclosure that are described herein below provide methods and apparatus that are useful in simplifying the performance of Montgomery multiplication while at the same time enhancing its resistance to attacks.
In an embodiment of the disclosure, a method for cyptographic computation, which includes receiving, in a Montgomery multiplier circuit having a predefined block size, a pair of operands A and B and a modulus M for computation of a Montgomery product of A and B mod M. A number n of blocks of the predefined block size is specified for use in the computation. A blinded modulus M' is computed as a multiple of the modulus M by a random factor R, M' = R*M, while selecting R so that the length of M' is less than n times the block size by at least two bits. The Montgomery multiplier circuit is operated to compute and output the Montgomery product of A and B mod M'.
Typically, operating the Montgomery multiplier circuit includes performing n iterations of a computational loop so as to generate a result equivalent to the Montgomery product of A and B mod M' upon conclusion of the n iterations without performing a conditional modular reduction of the result. In some embodiments, the result is passed as an operand to the Montgomery multiplier circuit for a further operation without performing the conditional modular reduction.
In a disclosed embodiment, the method includes selecting at least one further random factor R', and blinding at least one of the operands A and B by addition thereto of a blinding value R'*M, equal to a product of the at least one further random factor R' with the modulus M.
In an embodiment of the disclosure, a cryptographic computational device, which includes inputs configured to receive a pair of operands A and B and a modulus M, and a Montgomery multiplier circuit, which has a predefined block size and is configured to receive as inputs the pair of operands A and B and the modulus M and to generate an output equal to a Montgomery product of A and B mod M, using a specified number n of blocks of the predefined block size in computation of the Montgomery product. The Montgomery multiplier circuit includes a multiplier, which is configured to compute a blinded modulus M' as a product of the modulus M with a random factor R, M' = R*M, wherein R is selected so that the length of M' is less than n times the block size by at least two bits, and the Montgomery multiplier circuit is operative to compute and output the Montgomery product of A and B mod M'.

In an embodiment of the disclosure, a non-transitory computer-readable medium, storing instructions, wherein the instructions, when read by a programmable processor having a predefined block size, cause the processor to receive a pair of operands A and B and a modulus M for computation of a Montgomery product of A and B mod M using a specified number n of blocks of the predefined block size, to calculate a blinded modulus M' as a multiple of the modulus M by a random factor R, M' = R*M, while selecting R so that the length of M' is less than n times the block size by at least two bits, and to compute and output the Montgomery product of A and B mod M'.

To make the above features and advantages of the disclosure more comprehensible, several embodiments accompanied with drawings are described in detail as follows.

## BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.

Fig. 1 is a block diagram that schematically illustrates circuit elements in a cryptographic device, in accordance with an embodiment of the disclosure; and

Fig. 2 is a flow chart that schematically illustrates a method for modular multiplication, in accordance with an embodiment of the disclosure.

## DESCRIPTION OF THE EMBODIMENTS

Reference will now be made in detail to the present preferred embodiments of the disclosure, examples of which are illustrated in the accompanying drawings. Wherever possible, the same reference numbers are used in the drawings and the description to refer to the same or like parts.

Conventional Montgomery multiplication involves an iterative computation of a result over successive blocks of bits, followed by conditional reduction after computation of the most significant block. If the result is greater than the designated modulus M, it is reduced by subtraction of the modulus from the result. This conditional reduction adds to the complexity of the computation and also has been found to increase the vulnerability of the device performing the computation to side-channel attacks.

Embodiments of the present disclosure that are described herein provide improved Montgomery multiplication techniques, as well as devices implementing such techniques, that alleviate the need for the final step of conditional reduction. These techniques make use of blinding with a judiciously chosen random factor, and thus both enhance the security of computation and simplify the design of the multiplier.

In one of the exemplary embodiments of the disclosure, a Montgomery multiplier circuit has a predefined block size, for example, thirty-two bits, and receives as input a pair of operands A and B and a modulus M for computation of a Montgomery product of A and B mod M. The Montgomery multiplier circuit is configured to perform the computation over a specified number n of blocks of the predefined block size (i.e., using integers of length m = n*block size, or specifically m = 32n bits in the present example). For purposes of blinding, the circuit computes a blinded modulus M', which is a multiple of the specified modulus M by a random integer factor R, M' = R*M, and the computation is performed mod M'. The end result can be reduced to mod M in a straightforward manner and is unaffected by the use of the blinded modulus M' in the intermediate computations.

Cryptographic computations generally are designed to make use of all available bits, in order to increase the difficulty of attack. In the present exemplary embodiments, however, the random factor R is selected for each computation so that the length of M' is less than n times the block size by at least two bits. (Again, in the present example, this requirement means that the number of bits in M' is no more than m - 2 = 32n - 2.) The Montgomery multiplier circuit then computes and outputs the Montgomery product of A and B mod M'. Specifically, the circuit performs n iterations of a computational loop so as to generate a result, upon conclusion of the n iterations, that is equivalent to the Montgomery product of A and B mod M. Given the appropriate choice of the random factor R to limit the length of M', there is no need for a conditional modular reduction of the result.

More particularly, as long as the bit length of M' is no greater than m - 2, and the operands A and B have bit lengths no greater than m - 1, it can be shown that:

1) The lengths of the intermediate computational results at each iteration of the computational loop will not exceed m; and

2) The probability that the length of the final result will exceed m-1 bits is negligibly small (probability less than $2^{-128}$).

The first point above means that no more than m bits need be allocated in the circuit for storage of the intermediate computational results, and there is no need to check for and handle overflow bits in the computation. The second point means that the result of the computation can be fed back as an operand to the Montgomery multiplier circuit for a further computation without performing any sort of conditional modular reduction. This latter point is important, for example, in exponentiation operations, which require multiple successive multiplications.

The small probability that the final result will exceed m-1 bits is insignificant in practical applications of the disclosed techniques. Cryptographic systems are commonly designed to have a certain degree of tolerance to errors that may occur due to noise or even attempted fault injection attacks. On those rare occasions (with probability $2^{-128}$) in which the simplified design of the Montgomery multiplier circuit that is described herein causes an apparent fault, the system will generally invoke a repeat computation. The repeat computation will be performed with a different random factor R, so that the probability of a repeated error is infinitesimal.

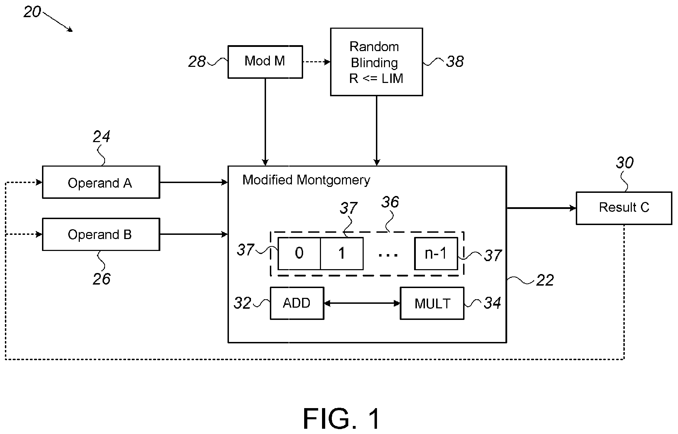

Fig. 1 is a block diagram that schematically illustrates circuit elements in a cryptographic device 20, in accordance with an embodiment of the disclosure. The circuit elements shown in the figure are typically implemented as hardware logic circuits in an integrated circuit (IC) device, but may alternatively be implemented in software on a suitable programmable processor. The pictured circuits carry out a Montgomery multiplication function that may be integrated into the cryptographic device in a wide variety of different configurations and applications, to perform operations connected with encryption, decryption, and/or authentication, for example. Only the elements of device 20 that are directly relevant to Montgomery multiplication are shown in the figure, and the integration of these elements with other components of device 20 will be apparent to those skilled in the art.

The device 20 comprises a Montgomery multiplier 22, which is modified, relative to multipliers that are known in the art, for the sort of simplified operation that is described above. Specifically, blinding of the modulus is applied in this embodiment with a random factor chosen such that conditional reduction of the result is not required.

The multiplier 22 has a pair of operand inputs 24, 26 (implemented as locations in a memory array, for example) to receive operands A and B, which may be of any length up to m - 1 bits, as defined above, and a modulus input 28, which receives the value of the modulus M that is to be used in computing the Montgomery product $A \odot B = A * B * 2^{-m}$ % M. (The symbol "%" is used in the present description and in the figures to denote "modulo.") Multiplier 22 outputs the result of the computation to an output 30 (such as another location in the memory array), whose contents may be delivered to other components of device 20 or fed back to one or both of inputs 24, 26 for subsequent computations, such as multiple, successive multiplications that are used in exponentiation.

The multiplier 22 comprises arithmetic circuits, including at least one adder 32 and at least one multiplier 34, with suitable interconnections for performing the iterative computations that are described herein below. The adder and multiplier typically operate on blocks of a predefined size, such as thirty-two bits. Multiplier 22 comprises one or more internal arrays 36 (possibly part of the same memory array as the inputs and outputs), to hold the blinded modulus M' and intermediate computational values. Array 36 typically holds n blocks 37 of the specified block length, so that the total length of array 36 is m bits, wherein in the present example, m = 32n, as noted above.

The multiplier 22 performs the computation of $A \odot B$ using a blinded modulus M' = R*M, wherein R is a random number that is chosen by a random generator 38. The random generator is configured to limit R such that, given the value of M in modulus input 28, the product R*M will be no more than m-2 bits long. (In other words, at least the two most significant bits in the most significant block of M' will be zero.) Random generator 38 may also generate one or more further random factors R', which are used in blinding one or both of the operands A and B by addition thereto of blinding values of the form R'*M.

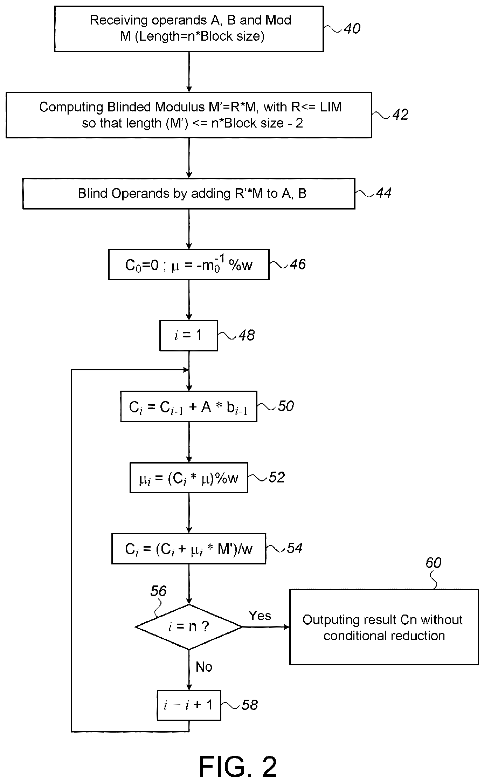

Fig. 2 is a flow chart that schematically illustrates a method for modular multiplication, in accordance with an embodiment of the disclosure. This method is described herein below, for the sake of clarity and convenience, with reference to the elements of device 20 that are shown in Fig. 1. Alternatively, the method may be carried out, mutatis mutandis, in other hardware configurations or in software, as noted above. All such alternative implementations are considered to be within the scope of the present disclosure.

Initially, multiplier 22 receives operands A and B and modulus M into inputs 24, 26 and 28, at an input step 40. The operands are integers of the form:

$$A = a_{n-1} \ldots a_1 a_0 = \sum_{i=0}^{n-1} a_i w^i, \qquad B = b_{n-1} \ldots b_1 b_0 = \sum_{i=0}^{n-1} b_i w^i$$

wherein the coefficients $a_i$ and $b_i$ are blocks of bits of the specified block length (thirty-two bits in the present example), and $w = 2^{32}$. The modulus M is blinded by multiplication with a random value R, which is constrained to be no greater than an appropriate limit (depending on the value of M) so that the blinded value M' contains no more than m - 2 bits, at a modulus blinding step 42. The blinded modulus has the form:

$$M' = m_{n-1} \ldots m_1 m_0 = \sum_{i=0}^{n-1} m_i w^i$$

wherein the coefficients $m_i$ are likewise blocks of thirty-two bits.

Optionally, for further enhancement of the security of device 20, the operands A and B are blinded by addition thereto of respective values of the form R'*M, wherein R' is some other random value, at an operand blinding step 44. The random values R' are typically constrained so that the operands actually used in the multiplication are no more than m - 1 bits long, i.e., at least the most significant bit of the operands is zero.

The multiplier 22 computes the product A⊙B by iterative operation over the blocks of the operands and intermediate results. To begin, a starting result parameter C0 and a modulus parameter μ are set to the values Co = 0; $\mu = -m_0^{-1} \% w$, at a parameter setting step 46. The iteration index i is set to 1, at an initialization step 48. Multiplier 22 then performs the following steps in succession for each value of i = 1, ..., n:

Step 50: $C_i = C_{i-1} + A^* b_{i-1}$.
Step 52: $\mu_i = (C_i^* \mu) \% w$.
Step 54: $C_i = (C_i + \mu_i^* M') / w$.

After each iteration, the multiplier checks the value of i, at step 56, and then increments i, at step 58, until the iterations are completed at i = n.

Upon completion of the iterations, multiplier 22 outputs the result C = Cn to output 30, at an output step 60. As explained above, no conditional reduction need be performed, and the length of the value C is, with high probability, no greater than m - 1.

As noted earlier, in an alternative embodiment of the present disclosure, the steps and operations described above are carried out by a suitable programmable processor under the control of software program instructions. The software may be downloaded to the processor in electronic form, for example over a network. Additionally or alternatively, the software may be stored on tangible, non-transitory computer-readable media, such as optical, magnetic, or electronic memory media.

It will be appreciated that the embodiments described above are cited by way of example, and that the present disclosure is not limited to what has been particularly shown and described hereinabove. Rather, the scope of the present disclosure includes both combinations and subcombinations of the various features described hereinabove, as well as variations and modifications thereof which would occur to persons skilled in the art upon reading the foregoing description and which are not disclosed in the prior art.

**Claims**

1. A method for cryptographic computation, comprising:

   receiving (40), in a Montgomery multiplier circuit (22) having a predefined block size, a pair of operands A and B and a modulus M for computation of a Montgomery product of A and B mod M;
   specifying a number n of blocks (37) of the predefined block size to be used in the computation, wherein n is an integer greater than 1;
   computing (42) a blinded modulus M' as a multiple of the modulus M by a random factor R, while selecting R so that the length of M' is less than n times the block size by at least two bits; and
   operating (46~60) the Montgomery multiplier circuit (22) to compute and output the Montgomery product of A and B mod M'.

2. The method according to claim 1, wherein operating the Montgomery multiplier circuit (22) comprises performing (46~58) n iterations of a computational loop so as to generate a result (C) equivalent to the Montgomery product of A and B mod M' upon conclusion of the n iterations without performing a conditional modular reduction of the result (C).

3. The method according to claim 2, further comprising:
   feeding (60) the result (C) as an operand to the Montgomery multiplier circuit (22) for a further operation without performing the conditional modular reduction.

4. The method according to claim 1, further comprising:

   selecting at least one other random factor R'; and
   blinding (44) at least one of the operands A and B by addition thereto of a blinding value which equal to a product of the at least one other random factor R' with the modulus M.

5. A device for cryptographic computation (20), comprising:

   inputs (24, 26, 28) configured to receive a pair of operands A and B and a modulus M; and
   a Montgomery multiplier circuit (22), which has a predefined block size and is configured to receive as inputs the pair of operands A and B and the modulus M and to generate an output equal to a Montgomery product of A and B mod M, using a specified number n of blocks (37) of the predefined block size in computation of the Montgomery product, wherein n is an integer greater than 1,
   wherein the Montgomery multiplier circuit comprises a multiplier (34), which is configured to compute a blinded modulus M' as a product of the modulus M with a random factor R, wherein R is selected so that the length of M' is less than n times the block size by at least two bits, and the Montgomery multiplier circuit (22) is operative to compute and output the Montgomery product of A and B mod M'.

6. The device (20) according to claim 5, wherein the Montgomery multiplier circuit (22) is configured to perform n iterations of a computational loop so as to generate a result (C) equivalent to the Montgomery product of A and B mod M' upon conclusion of the n iterations without performing a conditional modular reduction of the result (C).

7. The device (20) according to claim 6, wherein the Montgomery multiplier circuit (22) is configured to feed the result (C) as an operand to at least one of the inputs (24, 26, 28) for a further operation by the device, without performing the conditional modular reduction.

8. The device (20) according to claim 5, wherein the Montgomery multiplier circuit (22) is configured to blind at least one of the operands A and B by addition thereto of a blinding value which equal to a product of at least one further random factor R' with the modulus M.

9. A non-transitory computer-readable medium, storing instructions, wherein the instructions, when read by a programmable processor having a predefined block size, cause the processor to receive a pair of operands A and B and a modulus M for computation of a Montgomery product of A and B mod M using a specified number n of blocks (37) of the predefined block size, to calculate a blinded modulus M' as a multiple of the modulus M by a random factor R, while selecting R so that the length of M' is less than n times the block size by at least two bits, and to compute and output the Montgomery product of A and B mod M', wherein n is an integer greater than 1.

10. The non-transitory computer-readable medium according to claim 9, wherein the instructions cause the processor to perform n iterations of a computational loop so as to generate a result (C) equivalent to the Montgomery product of A and B mod M' upon conclusion of the n iterations without performing a conditional modular reduction of the result (C).

11. The non-transitory computer-readable medium according to claim 10, wherein the instructions cause the processor to feed the result (C) as an operand to a further Montgomery multiplication, without performing the conditional modular reduction.

12. The non-transitory computer-readable medium according to claim 9, wherein the instructions cause the processor to blind at least one of the operands A and B by addition thereto of a blinding value which equal to a product of at least one further random factor R' with the modulus M.

**Patentansprüche**

1. Verfahren für eine kryptographische Berechnung, wobei das Verfahren umfasst:

   in einer Montgomery-Multiplikationsschaltung (22) mit vordefinierter Blockgröße die zwei Operanden A und B und den Modul M zum Berechnen des Montgomery-Produkts von A und B mod M empfangen (40);
eine Anzahl n von Blöcken (37) der vordefinierten Blockgröße bestimmen, die bei der Berechnung zu verwenden sind, wobei n eine ganze Zahl größer 1 ist;
das Blindmodul M' durch einen Zufallsfaktor R als Vielfaches des Moduls M berechnen (42), wobei R so ausgewählt wird, dass die Länge von M' um mindestens zwei Bits kleiner ist als das n-fache der Blockgröße; und
die Montgomery-Multiplikationsschaltung (22) so betreiben (46-60), dass das Montgomery-Produkt von A und B mod M' berechnet und ausgegeben wird.

2. Verfahren gemäß Anspruch 1, wobei das Ergebnis (C) nach n Iterationen (46-58) einer Rechenschleife der Montgomery-Multiplikationsschaltung (22) dem Montgomery-Produkt von A und B mod M' entspricht, ohne das Ergebnis (C) bedingt modular zu reduzieren.

3. Verfahren gemäß Anspruch 2, ferner umfassend:
das Ergebnis (C) der Montgomery-Multiplikationsschaltung (22) für eine weitere Operation ohne bedingte modulare Reduktion als Operand zuführen (60).

4. Verfahren gemäß Anspruch 1, ferner umfassend:

mindestens einen anderen Zufallsfaktor R' auswählen; und
mindesten einen der Operanden A oder B durch Addition eines Blindwertes, der gleich einem Produkt von mindestens einem anderen Zufallsfaktor R' mit Modul M ist, zu verdecken (44).

5. Vorrichtung für kryptographische Berechnungen (20), umfassend:

Eingänge (24, 26, 28), die dafür ausgelegt sind, die Operanden A und B und einen Modul M zu empfangen; und
eine Montgomery-Multiplikationsschaltung (22), die eine vordefinierte Blockgröße aufweist und dafür ausgelegt ist, die Operanden A und B und den Modul M als Eingaben zu empfangen und unter Verwendung einer bestimmten Anzahl n von Blöcken (37) der vordefinierten Blockgröße eine dem Montgomery-Produkt von A und B mod M entsprechende Ausgabe zu berechnen, wobei n eine ganze Zahl größer 1 ist,
wobei die Montgomery-Multiplikationsschaltung einen Multiplikator (34) umfasst, der dafür ausgelegt ist, das Blindmodul M' mit einem Zufallsfaktor R als Produkt des Moduls M zu berechnen, wobei R so ausgewählt ist, dass die Länge von M' um mindestens zwei Bits kleiner ist als das n-fache der Blockgröße und die Montgomery-Multiplikationsschaltung (22) das Montgomery-Produkt von A und B mod M' berechnet.

6. Vorrichtung (20) gemäß Anspruch 5, wobei die Montgomery-Multiplikationsschaltung (22) dafür ausgelegt ist, nach n Iterationen einer Rechenschleife ein dem Montgomery-Produkt von A und B mod M' entsprechendes Ergebnis (C) auszugeben, ohne das Ergebnis (C) bedingt modular zu reduzieren.

7. Vorrichtung (20) gemäß Anspruch 6, wobei die Montgomery-Multiplikationsschaltung (22) dafür ausgelegt ist, das Ergebnis (C) ohne bedingte modulare Reduktion zur weiteren Operation der Vorrichtung als Operand an mindestens einen der Eingänge (24, 26, 28) zu liefern.

8. Vorrichtung (20) gemäß Anspruch 5, wobei die Montgomery-Multiplikationsschaltung (22) dafür ausgelegt ist, mindesten einen der Operanden A oder B durch Addition eines Blindwertes, der gleich einem Produkt von mindestens einem anderen Zufallsfaktor R' mit Modul M ist, zu verdecken.

9. Nichtflüchtiges, Befehle speicherndes, computerlesbares Medium, wobei die Anweisungen folgendes bewirken, wenn sie von einem programmierbaren Prozessor mit einer vordefinierten Blockgröße gelesen werden: der Prozessor empfängt die Operanden A und B und einen Modul M und berechnet das Montgomery-Produkt von A und B mod M unter Verwendung einer bestimmten Anzahl n von Blöcken (37) der vordefinierten Blockgröße, der Prozessor berechnet das Blindmodul M' mittels eines Zufallsfaktors R als Vielfaches des Moduls M, während R so gewählt wird, dass die Länge von M' um mindestens zwei Bits kleiner ist als das n-fache der Blockgröße und der Prozessor berechnet das Montgomery-Produkt von A und B mod M' und gibt es aus, wobei n eine ganze Zahl größer 1 ist.

10. Nichtflüchtiges, computerlesbares Medium gemäß Anspruch 9, wobei die Befehle den Prozessor veranlassen, durch n Iterationen einer Rechenschleife ein dem Montgomery-Produkt von A und B mod M' entsprechendes Ergebnis (C) auszugeben, ohne das Ergebnis (C) bedingt modular zu reduzieren.

11. Nichtflüchtiges, computerlesbares Medium gemäß Anspruch 10, wobei die Befehle bewirken, dass der Prozessor das Ergebnis (C) ohne bedingte modulare Reduktion für eine weitere Montgomery-Multiplikation als Operand eingibt.

12. Nichtflüchtiges, computerlesbares Medium gemäß Anspruch 9, wobei die Befehle bewirken, dass der Prozessor mindesten einen der Operanden A oder B durch Addition eines Blindwertes, der gleich einem Produkt von mindestens einem anderen Zufallsfaktor R' mit Modul M ist, verdeckt.

**Revendications**

1. Un procédé de calcul cryptographique comprenant :

   recevoir (40), dans un circuit multiplicateur de Montgomery (22) ayant une taille de bloc prédéfinie, une paire d'opérandes A et B et un module M pour le calcul d'un produit de Montgomery du mod M de A et B ;
   spécifier un nombre n de blocs (37) de la taille de bloc prédéfinie à utiliser dans le calcul, où n est un nombre entier supérieur à 1 ;
   calculer (42) un module aveugle M' en tant que multiplicateur du module M par un facteur aléatoire R, tout en sélectionnant R de sorte que la longueur de M' soit inférieure à n fois la taille de bloc d'au moins deux bits ; et
   actionner (46-60) le circuit multiplicateur de Montgomery (22) pour calculer et générer le produit de Montgomery du mod M' de A et B.

2. Le procédé selon la revendication 1, dans lequel l'actionnement du circuit multiplicateur de Montgomery (22) consiste à effectuer (46-58) n itérations d'une boucle de calcul de manière à générer un résultat (C) équivalent au produit de Montgomery du mod M' de A et B à la conclusion des n itérations sans effectuer une réduction modulaire conditionnelle du résultat (C).

3. Le procédé selon la revendication 2, comprenant en outre :
   la transmission (60) du résultat (C) en tant qu'opérande au circuit multiplicateur de Montgomery (22) pour une opération supplémentaire sans effectuer la réduction modulaire conditionnelle.

4. Le procédé selon la revendication 1, comprenant en outre :

   sélectionner au moins un autre facteur aléatoire R' ; et
   voiler (44) au moins l'un des opérandes A et B en plus d'une valeur voilée qui est égale à un produit d'au moins un autre facteur aléatoire R' avec le module M.

5. Un dispositif de calcul cryptographique (20) comprenant :

   des entrées (24, 26, 28) configurées pour recevoir une paire d'opérandes A et B et un module M ; et
   un circuit multiplicateur de Montgomery (22), qui a une taille de bloc prédéfinie et est configuré pour recevoir en entrée la paire d'opérandes A et B et le module M et pour générer une sortie égale à un produit de Montgomery du mod M de A et B, utilisant un nombre spécifié n de blocs (37) de la taille de bloc prédéfinie dans le calcul du produit de Montgomery, où n est un nombre entier supérieur à 1,
   dans lequel le circuit multiplicateur de Montgomery comprend un multiplicateur (34) configuré pour calculer un module aveugle M' en tant que produit du module M avec un facteur aléatoire R, dans lequel R est sélectionné de sorte que la longueur de M' soit inférieure à n fois la taille du bloc par au moins deux bits,
   et le circuit multiplicateur de Montgomery (22) est opérationnel pour calculer et générer le produit de Montgomery du mod M' de A et B.

6. Le dispositif (20) selon la revendication 5, dans lequel le circuit multiplicateur de Montgomery (22) est configuré pour effectuer n itérations d'une boucle de calcul de manière à générer un résultat (C) équivalent au produit de Montgomery du mod M' de A et B à la fin des n itérations sans effectuer une réduction modulaire conditionnelle du résultat (C).

7. Le dispositif (20) selon la revendication 6, dans lequel le circuit multiplicateur de Montgomery (22) est configuré pour transmettre le résultat (C) en tant qu'opérande à au moins une des entrées (24, 26, 28) pour une opération supplémentaire par l'appareil, sans effectuer la réduction modulaire conditionnelle.

8.  Le dispositif (20) selon la revendication 5, dans lequel le circuit multiplicateur de Montgomery (22) est configuré pour voiler au moins l'un des opérandes A et B en plus d'une valeur voilée qui est égale à un produit d'au moins un autre facteur aléatoire R' avec le module M.

9.  Un support non transitoire lisible par ordinateur, stockant des instructions, dans lequel les instructions, lorsque lues par un processeur programmable ayant une taille de bloc prédéfinie, font que le processeur reçoit une paire d'opérandes A et B et un module M pour le calcul d'un produit Montgomery du mod M de A et B en utilisant un nombre spécifié n de blocs (37) de la taille de bloc prédéfinie, pour calculer un module aveugle M' comme un multiple du module M par un facteur aléatoire R, tout en sélectionnant R pour que la longueur de M' soit inférieure à n fois la taille de bloc d'au moins deux bits, et pour calculer et générer le produit de Montgomery du mod M' de A et B, où n est un nombre entier supérieur à 1.

10. Le support non transitoire lisible par ordinateur selon la revendication 9, dans lequel les instructions amènent le processeur à effectuer n itérations d'une boucle de calcul de manière à générer un résultat (C) équivalent au produit de Montgomery du mod M' de A et B à la conclusion des n itérations sans effectuer une réduction modulaire conditionnelle du résultat (C).

11. Le support non transitoire lisible par ordinateur selon la revendication 10, dans lequel les instructions amènent le processeur à générer le résultat (C) en tant qu'opérande à une autre multiplication de Montgomery, sans effectuer la réduction modulaire conditionnelle.

12. Le support non transitoire lisible par ordinateur selon la revendication 9, dans lequel les instructions amènent le processeur à voiler au moins l'un des opérandes A et B en plus d'une valeur voilée qui est égale à un produit d'au moins un autre facteur aléatoire R' avec le module M.

FIG. 1

FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8422671 B

- US 8738927 B

**Non-patent literature cited in the description**

- **MENEZES et al.** Handbook of Applied Cryptography. 1996, 600-603